# EUROPEAN PATENT APPLICATION

(11) **EP 4 830 515 A1**
(43) Date of publication of application: **28.10.2026**
(21) Application number: 26168693.5
(22) Date of filing: 27.03.2026
(51) Int. Cl.: A01K 1/035

(54) **INFLATABLE DOG BED**

(30) Priority: 28.03.2025 NL 2040083
(71) Applicant: Knoop B.V., 6883 JP Velp (NL)
(72) Inventor: KNOOP, Paulus Arnoldus Gerardus Jacobus, 6883 JP Velp (NL)
(74) Representative: V.O.

(57) **Abstract**

Dog bed (1) comprising a dog bed cover (2) having various cover wall parts, the cover wall parts defining a rectangular bottom chamber (3) having four side edges (4c-4f) and a rim chamber (5) enclosing the bottom chamber (3) and extending along the four side edges (4c-4f), wherein the bottom chamber (3) is filled with an inflatable bottom cushion (6) having a bottom cushion inflation valve (7) and wherein the rim chamber (5) is filled with at least one inflatable rim cushion (8a, 8b) having a rim cushion inflation valve (9), wherein the rim chamber (5) has a uniform height along its entire length; and wherein between the dog cover (2) and the top part of the inflatable bottom cushion (6), a fabric layer (10) is provided which is made from a thick and soft fabric such as a polyester teddy fabric.

## Description

### FIELD

The invention relates to an inflatable dog bed for comfortable resting of a dog.

### BACKGROUND

A conventional dog bed comprising a cover filled with a bottom cushion and two or more rim cushions is disclosed in WO2014/130634 A1. The known conventional dog bed takes up a lot of space when it has to be transported, for example, from the manufacturer to the retailer or by a user. Further, the cover wall part that covers the upwardly directed side of the bottom cushion includes creases, folds and crumbles which are detrimental for the comfort and the esthetical appearance.

US2016/01060161 A1 also discloses a rectangular dog bed having a center cushion 36 and two pairs, i.e. four separate, perimeter cushions 38, 40. The cushions are conventional and are accommodated in a cover or shell 28. The corners of the known shell as shown in Figs. 1 and 2 of that publication have miter seams to provide an attractive appearance.

Inflatable dog beds are known, for example from CN106305455A. The dog bed comprises a bed body, a bed cushion and a bed cover.

The main advantage of inflatable dog beds is that they can be deflated to thereby reduce their volume, making them more compact for storage and transportation. This reduced volume lowers transport costs by allowing more beds to fit within a shipping container. A benefit for the retailer selling the beds is that less storage space is required to store the beds. Consumers can find the inflatable dog beds convenient for travel because they are relatively easy to transport.

The problems of the known inflatable dog beds are instability of the bed and reduced comfort for the dog. The beds tend to tilt or fall over when a dog does not rest in the middle of the bed, especially when the dog is relatively heavy. Furthermore, dogs often find the sensation of an air-filled cushion uncomfortable, as it lacks the firmness and support of traditional dog beds. When the dog steps onto the inflatable cushion, the cushion compresses significantly, causing instability and making it difficult for the dog to maintain a comfortable resting position. Additionally, the inflatable cushion tends to make noise when the dog steps on it or moves on it which scares the dog off.

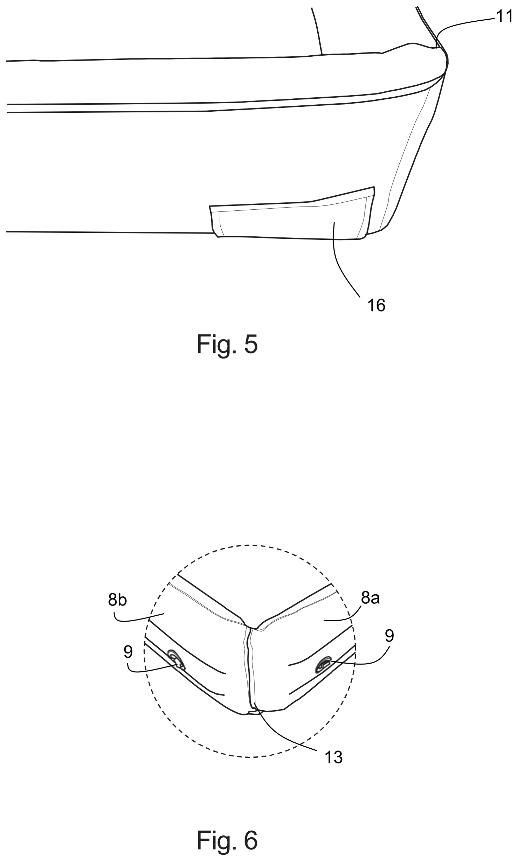

US 2020/0315130 A1 discloses a travel pet bed including a cover and an inflatable cushion. The inflatable cushion of the known travel pet bed comprises a fluid filled bladder 300 including a bed bladder 302 and a bolster bladder 304. The bed bladder 302 and the bolster bladder 304 are connected to each other and are, as a whole, accommodated in a case 100 or cover 200. The parts of the case 100 or cover 200 that encase the bed bladder 302 are not pulled taut by radially outwardly directed forces exerted by the bolster bladder 304. Instead, if the bolster bladder 304 would exert a radially outwardly directed force when being in an inflated state, that force will be taken up by the bed bladder 302, because the bolster bladder 304 is directly connected with the bed bladder 302 along the entire circumference of the bed bladder 302. Consequently, the parts of the case 100 or cover 200 that cover the bed bladder 302 have folds, creases and crumbles as is clearly visible in Figs. 5 and 6 of US'130. Such folds, creases and crumbles are detrimental to the esthetical appearance of the known travel pet bed and are also less comfortable for the dog using the known bed.

### SUMMARY

An object of the present invention is to enhance the stability of inflatable dog beds and to provide a fold and crease free appearance to improve the appearance and the comfort of the dog bed. Another object of the present invention is to enhance the comfort of inflatable dog beds and to reduce the noise produced by the dog bed when a dog steps on the bed or moves in the bed.

To that end, a dog bed according to claim 1 is provided.

Improved stability is achieved by ensuring that the rim of the dog bed extends along all sides of the bottom chamber and has a uniform height along its entire length. When the height of the rim of the dog is not uniform, but, for example, is partially lower at one side edge so as to create a sort of an entrance to the dog bed, the neighbouring rim chamber parts can more easily flex inwardly or outwardly, which is detrimental to the stability of the dog bed as a whole. Due to the fact that the rim chamber is connected with the bottom chamber along the entire circumference of the bottom chamber, stability of the dog bed as a whole is improved as well. In fact, due to this connection extending around the entire circumference of the bottom chamber, the possibility of movement of the rim chamber relative to the bottom chamber is minimized which is of the essence for providing improved stability. Stability is further improved by providing extra weight in the bottom part of the dog bed in the form of the thick and soft fabric layer.

Improved comfort is also achieved by the said thick fabric layer. The layer prevents excessive compression of the bottom part of the dog bed when the dog steps on it, thereby reducing the sensation of the air cushion. Furthermore, the fabric layer dampens noise generated by the cushion, contributing to a more comfortable experience for the dog. In particular, the dog is not scared off by sounds produced by the dog bed when stepping on it or moving on it while being in the dog bed.

Further, by virtue of the rectangular ring-shaped inflatable rim cushion, that is separate from the bottom cushion and that is accommodated in a separate rim chamber, the wall parts of the rim chamber exert a radially outwardly directed force on the wall parts of the bottom chamber thereby pulling taut the wall parts of the bottom chamber and removing or at least reducing any folds, creases or crumbles in these bottom chamber wall parts. The absence of such folds and creases improves the comfort and the appearance of the dog bed.

In an embodiment, the dog bed cover comprises a rim chamber inner cover wall part and a rim chamber outer cover wall part, which bound the rim chamber. More specifically, the dog bed cover comprises a rim chamber inner cover wall part and a rim chamber outer cover wall part along each edge of the bottom chamber. In corners of the rim chamber, the rim chamber inner cover wall parts are provided with a dart seam to mutually connect the rim chamber inner cover wall parts and configured such that the rim chamber snugly fits around the inflatable rim cushion substantially without folds. A snug fit further enhances the visual appeal of the dog bed. Potential customers prefer dog beds with a neat, wrinkle-free, tailored look.

In an embodiment, the rim cushion consists of two rim cushion parts. A first rim cushion part extends along a first and a second side edge of the four side edges, wherein the first and the second side edge are adjacent to each other. A second rim cushion part extends along a third and a fourth side edge of the four side edges wherein the third and fourth side edges are adjacent to each other. Each of the rim cushions has a rim cushion inflation valve. Having two rim cushions instead of one, ensures that the air is distributed evenly along the rim. The invention does not exclude that there are more than two rim cushion parts. The rim cushion parts are interconnected so as to form a ring that is closed in itself. This has the consequence that in a blown-up condition of the rim cushions, the rim cushions exert a radially outwardly directed force on the rim chamber outer cover wall parts thereby tightening those rim chamber outer cover wall parts. Due to the fact that the rim chamber is connected to the bottom chamber along the entire circumference of the bottom chamber, the radially outwardly directed force on the rim chamber also tightens the bottom chamber cover wall parts that bound the bottom chamber thus providing a neat an unwrinkled appearance to the upper bottom chamber wall part as well which highly appreciated by the clients and improves the comfort to the dog using the dog bed as well.

In order to further improve the stability of the variant having two rim cushion parts, both ends of the first rim cushion part is connected to associated ends of the second rim cushion part by heat weld connections to from a ring-shaped rim cushion that is closed in itself. Thus, a ring-shaped configuration may be created. In a mounted condition in which the rim cushions are mounted in the rim chamber, the heat weld or heat welds may extend vertically and may be positioned in an associated one of the corners of the dog bed. As described before, due to the closed annular shaped configuration of the rim cushion, the rim cushion will exert a radially outwardly directed force on the rim chamber outer wall parts. Due to the fact that the rim chamber is connected to the bottom chamber along the entire circumference of the bottom chamber, the radially outwardly directed force will also be exerted on the bottom chamber wall parts when the rim cushion is in the inflated condition. This leads to a wrinkle free bottom chamber wall parts and wrinkle free rim chamber wall parts.

According to the invention, the polyester fabric layer is at least positioned between the top part of the inflatable bottom cushion and the dog bed cover. This does not imply that the fabric may not be provided elsewhere. For example, the fabric can be substantially encasing the inflatable bottom cushion. This would further enhance the stability because it adds more weight to the dog bed. It would also further increase comfort, since even more noise is dampened when a dog steps on the bed or moves in the bed.

In an embodiment, the cover wall parts defining the rim chamber and the cover wall parts defining the bottom chamber may be sewed together along the side edges of the bottom chamber.

Sewing is a convenient method to connect the various cover wall parts together. In a practical embodiment, the rim chamber may be defined by eight rim chamber cover wall parts. Along each side edge of the rectangular bottom chamber a rim chamber inner cover wall part and a rim chamber outer cover wall part may extend. The bottom chamber may be defined by two bottom chamber cover wall parts, in particular an bottom chamber upper cover wall part and an bottom chamber lower cover wall part.

In an embodiment, in an inflated condition of the inflatable bottom cushion and the inflatable rim cushion, the cover wall parts defining the rim chamber rest on the floor and are positioned radially outwardly of the cover wall parts defining the bottom chamber.

In this embodiment, the stability of the rim of the dog bed is optimized because the rim is supported by the floor and not by the inflatable bed cushion. Additionally, by virtue of this configuration, the radially outwardly directed forces exerted by the wall parts of the rim chamber are conveyed to the wall parts defining the bottom chamber in a very effective manner.

In an embodiment, at least one of the cover wall parts defining the rim chamber may comprise a rim chamber zipper extending at least partially along the length of the rim chamber and configured to provide access to the rim chamber.

A zipper is an easy way to provide access to the rim chamber to place a rim cushion into the rim chamber or to remove a rim cushion from the rim chamber.

In an embodiment, at least one of the bottom chamber cover wall parts defining the bottom chamber comprises bottom chamber zipper configured to provide access to the bottom chamber.

Thus, a separate opening can be formed via the bottom chamber zipper. Such a configuration with a separate rim chamber zipper and bottom chamber zipper provides the possibility to snugly fit of the dog bed cover over both the bottom cushion and the at least one rim cushion.

In an embodiment, at least one of the bottom chamber cover wall parts has a bottom chamber access opening which is closeable by a first closing flap, the bottom chamber access opening being positioned and dimensioned to provide access to the bottom chamber inflation valve.

In an embodiment, at least one of the rim chamber cover wall parts has at least one rim chamber access opening which is closeable by a second closing flap, the rim chamber access opening being positioned and dimensioned to provide access to the at least one rim chamber inflation valve.

Both the first and the second closing flaps may be provided with hook-and-loop like fastening provision (e.g. Velcro^{®}) although other releasable fastening provisions are not excluded, like for example one or more buttons, push buttons or a zipper.

The inflation valves may be configured to be pressed into the respective bottom cushion and rim cushion when not used for inflating or deflating, such that the cushions have no protruding inflation valves.

### BRIEF DESCRIPTION OF THE FIGURES

In the following, the invention will be explained further using examples of embodiments and drawings. The drawings are schematic and merely show examples. In the drawings, the corresponding elements have been provided with corresponding reference signs. In the drawings:
Fig 1. shows a perspective view of an example of the dog bed;
Fig. 2a-2c show cover wall parts of which a dog bed cover may be manufactured;
Fig 3. shows a top view of the dog bed, wherein the dashed lines show the inflatable cushions placed inside of the dog bed cover;

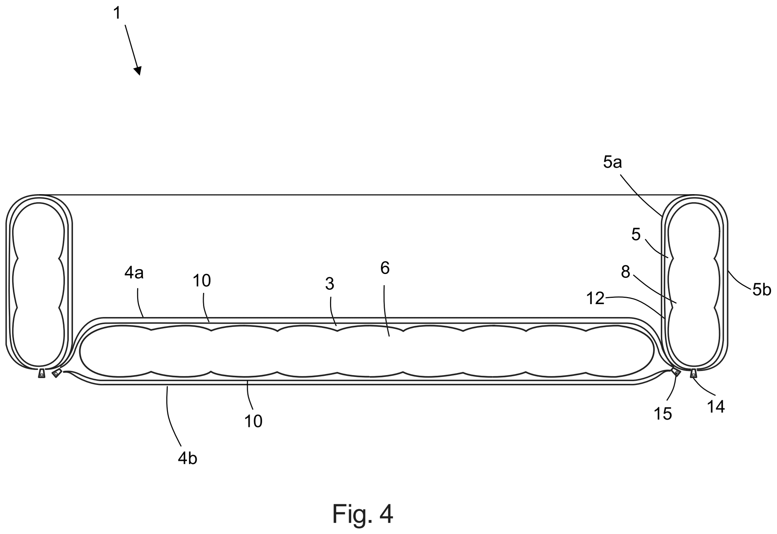

Fig. 4 shows a cross section over line IV-IV of Fig. 3;
Fig. 5 shows a perspective view of a corner of the dog bed; and
Fig 6. shows a perspective view of a corner of the inflatable rim cushion, at the position at which two inflatable rim cushions are connected by a heat weld.

### DETAILED DESCRIPTION

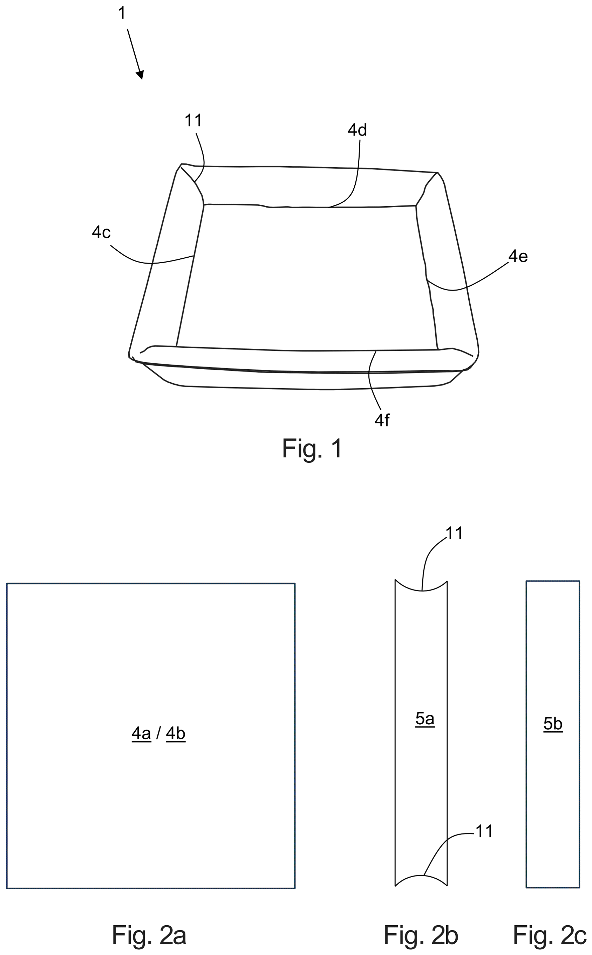

Fig. 1 shows an example of a dog bed 1 according to the invention. The dog bed 1 comprises a dog bed cover 2 having various cover wall parts 4a, 4b, 5a, 5b. Fig. 2a shows an example of an upper cover wall part 4a that bounds the bottom chamber 3 at an upper side thereof. Fig. 2a also represents a lower cover wall part 4b that bounds the bottom chamber 3 at a bottom side thereof. Fig. 2b shows one of four rim chamber inner cover wall parts 5a. Fig. 2c shows one of four rim chamber outer cover wall parts 5b. The rim chamber cover wall parts 5a, 5b together bound a rim chamber 5. The cover wall parts 4a, 4b, 5a, 5b may be connected to each other by sewing. Optionally, at the sews a zipper may be present to provide access to the bottom chamber 3 and the rim chamber 5. The bottom chamber 3 is rectangular and has four side edges 4e-4f. The rim chamber 5 encloses the bottom chamber 3 and extends along the four side edges 4c-4f. The rim chamber 5 is connected to the bottom chamber 4 along the entire circumference of the bottom chamber 4. The bottom chamber 3 is filled with an inflatable bottom cushion 6 having a bottom chamber inflation valve 7. The rim chamber 5 is also filled with an inflatable rim cushion 8a, 8b having a rim chamber inflation valve 9. In the example shown in the figures, the rim cushion 8a, 8b consists of two rim cushion parts 8a, 8b which are each inflatable with an associated rim chamber inflation valve 9. The rim chamber 5 has a uniform height along its entire length. Between the dog bed cover 2, in particular between the upper cover wall part 4a and a top part of the inflatable bottom cushion 6, a fabric layer 10 is provided which is made from a thick and soft fabric such as a polyester teddy fabric.

The rim chamber 5 is bounded by the rim chamber inner cover wall part 5a and the rim chamber outer cover wall part 5b of the dog bed cover 2. In the corners of the rim chamber 5, the rim chamber inner cover wall part 5a is provided with a dart seam 11 configured such that the rim chamber cover wall parts 5a, 5b snugly fit around the inflatable rim cushion 8a, 8b substantially without folds. As is clearly visible in Fig. 2b, the dart seam 11 is formed by the concavely curved end edges of the rim chamber inner cover wall part 5a which, as it were, take away any surplus cover sheet material, so that the rim chamber inner cover wall parts 5a are snugly fitted around the at least one rim cushion 8a, 8b.

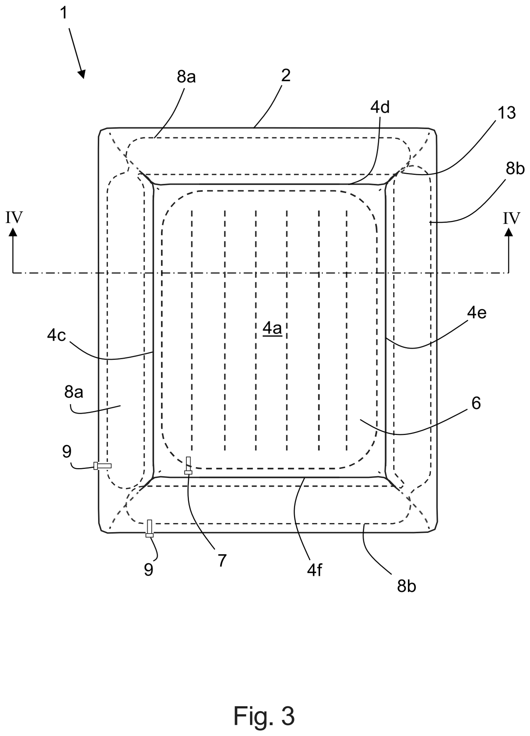

In the example shown in the figures, in particular Fig. 3, the rim cushion 8a, 8b consists of two rim cushion parts 8a, 8b. A first rim cushion part 8a extends along a first 4c and second 4d side edge of the four side edges 4c-4f, wherein the first and second side edges 4c, 4d are adjacent to each other. A second rim cushion part 8b extends along a third 4e and a fourth 4f side edge of the four side edges 4c-4f wherein the third and fourth side edges are adjacent to each other, each rim cushion part 8a, 8b having an rim cushion inflation valve 9.

In the example, shown in the figures, one end of the first rim cushion part 8a is connected to an end of the second rim cushion part 8b by a heat weld connection 13. The position of the heat weld connection 13 is indicated in Fig. 3. Fig. 6 shows the ends of the two rim cushions 8a and 8b which are connected to each other by the heat weld connection 13 in a perspective view in which the dog bed cover 2 is removed. In fact, both ends of the first rim cushion part 8a are connected to associated ends of the second rim cushion part 8b so as to form a rectangular ring-shaped rim cushion 8a, 8b that is closed in itself. When rim cushion consists of a single part, this single rim cushion is also ring-shaped and closed in itself.

As is clearly visible in Fig. 3, the fabric layer 10 substantially encases the inflatable bottom cushion 6.

As also visible in Fig. 3, another fabric layer 12 made from a thick and soft fabric such as a polyester teddy fabric is provided between the rim cushion parts 8a, 8b and the rim chamber inner cover wall part 5a of the dog bed cover 2. In fact, in the shown example, the another fabric layer 12 substantially encases the rim cushions 8a, 8b.

The rim chamber wall parts 5a, 5b defining the rim chamber 5 and the upper and lower cover wall parts 4a, 4b defining the bottom chamber 3 are sewed together along the side edges 4c-f of the bottom chamber 3.

Fig. 3 shows that at least one of the rim chamber wall parts 5a, 5b defining the rim chamber 5 comprises a rim chamber zipper 14 extending at least partially along the length of the rim chamber 5 and configured to provide access to the rim chamber 5.

Fig. 3 also shows that at least one of the upper and lower cover wall parts 4a, 4b defining the bottom chamber 3 comprises bottom chamber zipper 15 configured to provide access to the bottom chamber 3.

In the shown example, the rim chamber zipper 14 and the bottom chamber zipper 15 extend along the sewing seam along which the rim chamber inner cover wall part 5a is connected to the rim chamber outer cover wall part 5b and along which the upper cover wall part 4a is connected to the lower cover wall part 4b. It is clear that the zippers 14 and 15 may also be provided at other positions as long as they provide a suitable opening for introducing the rim cushion parts 8a, 8b and the bottom cushion 6 into respectively the rim chamber 5 and the bottom chamber 3.

At least one of the cover wall parts 4a, 4b bounding the bottom chamber 3 has a bottom chamber access opening which is closeable by a first closing flap (not shown). The bottom chamber access opening being positioned and dimensioned to provide access to the bottom cushion inflation valve 7. Preferably, the bottom chamber access opening is provided in the bottom cover wall part 4b of the dog bed cover 2. This has the advantage that the upwardly directed surface of the bottom cushion 6 on which the dog will lie when using the dog bed 1 is free of a bottom cushion inflation valve 7.

Fig. 5 shows that the rim chamber outer cover wall part 5b of the example of the dog bed 1 shown in the figures has at least one rim chamber access opening which is closeable by a second closing flap 16. The rim chamber access opening being positioned and dimensioned to provide access to the at least rim cushion inflation valve 9. As stated before, both the first and the second closing flap 16 may be provided with a hook-and-loop provision to releasably close the closing flap 16. Other options are also possible like e.g. buttons, push buttons, a zipper, etc.

The invention is not limited to the example shown in the drawings. The reference number in the claims and the detailed description do not limit the scope of what is claimed and described to the example shown in the drawings. The scope of the invention is determined by the claims.

## Claims

1. Dog bed (1) comprising:
- a dog bed cover (2) having various cover wall parts, the cover wall parts defining:
∘ a rectangular bottom chamber (3) having four side edges (4c-4f);
∘ a rim chamber (5) enclosing the bottom chamber (3) and extending along the four side edges (4c-4f), the rim chamber (5) being connected to the bottom chamber (4) along the entire circumference of the bottom chamber (4), the rim chamber (5) having a uniform height along its entire length;
the dog bed (1) further comprising:
- an inflatable bottom cushion (6) that fills the bottom chamber (3), the bottom cushion (6) having an inflation valve (7),
- an inflatable rim cushion (8a, 8b) that is separate from the inflatable bottom cushion (6) and that fills the rim chamber (5), the inflatable rim cushion (8a, 8b) having a rim cushion inflation valve (9), wherein the inflatable rim cushion (8a, 8b) is closed in itself so as to form a rectangular ring shaped rim cushion (6), so that in an inflated state, the inflatable rim cushion (8a, 8b) exerts a radially outwardly directed force on the rim chamber (5) and by consequence, the rim chamber (5) also exerts a radially outwardly directed force on the cover wall parts bounding the bottom chamber (3), so that the cover wall parts bounding the bottom chamber (3) are pulled taut by the rim chamber; and
- a polyester fabric layer (10) at least being provided between the dog cover (2) and the top part of the inflatable bottom cushion (6).

2. Dog bed (1) according to claim 1, wherein the rim chamber (5) is bounded by a rim chamber inner cover wall part (5a) and a rim chamber outer cover wall part (5b) of the dog bed cover (2), wherein in corners of the rim chamber (5) the rim chamber inner cover wall part (5a) is provided with a dart seam (11) configured such that the rim chamber cover wall parts (5a, 5b) snugly fit around the inflatable rim cushion (8) substantially without folds.

3. Dog bed (1) according to claim 1 or 2, wherein the rim cushion (8a, 8b) consists of two rim cushion parts (8a, 8b), wherein a first rim cushion part (8a) extends along a first (4c) and second (4d) side edge of the four side edges (4d-4f), wherein the first and second side edge (4c, 4d) are adjacent to each other, and wherein a second rim cushion part (8b) extends along a third (4e) and a fourth (4f) side edge of the four side edges (4d-4f) wherein the third and fourth side edges (4e, 4f) are adjacent to each other, each rim cushion (8a, 8b) having a rim cushion inflation valve (9), wherein both ends of the first rim cushion part (8a) are connected to associated ends of the second rim cushion part (8b) by heat weld connections (13) to form the ring-shaped rim-cushion (8a, 8b) that is closed in itself.

4. Dog bed (1) according to any of the preceding claims, wherein the fabric layer (10) substantially encases the inflatable bottom cushion (6).

5. Dog bed (1) according to any of the preceding claims, wherein another polyester fabric layer (12), such as a polyester teddy fabric, is provided between the rim cushion (8a, 8b) and the rim chamber inner cover wall part (5a) of the dog bed cover (2).

6. Dog bed (1) according to claim 5, wherein the another fabric layer (12) substantially encases the rim cushion (8a, 8b).

7. Dog bed (1) according to any of the preceding claims, wherein cover wall parts (5a, 5b) defining the rim chamber (5) and the cover wall parts (4a, 4b) defining the bottom chamber (3) are sewed together along the side edges (4c-4fd) of the bottom chamber (3).

8. Dog bed (1) according to any one of the preceding claims, wherein in an inflated condition of the inflatable bottom cushion (6) and the inflatable rim cushion (8a, 8b), the cover wall parts (5a, 5b) defining the rim chamber (5) rest on the floor and are positioned radially outwardly of the cover wall parts (4a, 4b) defining the bottom chamber (3).

9. Dog bed (1) according to any of the preceding claims, wherein at least one of the cover wall parts (5a, 5b) defining the rim chamber (5) comprises a rim chamber zipper (14) extending at least partially along the length of the rim chamber (5) and configured to provide access to the rim chamber (5).

10. Dog bed (1) cover according to any of the preceding claims, wherein at least one of the cover wall parts (4a, 4b) defining the bottom chamber (3) comprises a bottom chamber zipper (15) configured to provide access to the bottom chamber (3).

11. Dog bed (1) according to any of the preceding claims, wherein at least one of the cover wall parts (4a, 4b) defining the bottom chamber (3) has a bottom chamber access opening which is closeable by a first closing flap, the bottom chamber access opening being positioned and dimensioned to provide access to the bottom cushion inflation valve (7).

12. Dog bed (1) according to any of the preceding claims, wherein at least one of the cover wall parts (5b) defining the rim chamber (5) has at least one rim chamber access opening which is closeable by a second closing flap (16), the rim chamber access opening being positioned and dimensioned to provide access to the at least one rim cushion inflation valve (9).
